# EUROPÄISCHE PATENTANMELDUNG

(11) **EP 0 824 125 A1**
(43) Veröffentlichungstag der Anmeldung: **18.02.1998**
(21) Anmeldenummer: 97810553.4
(22) Anmeldetag: 05.08.1997
(51) Int. Cl.: C08G 61/08, C08K 3/20, H01B 3/30

(54) **Umhüllungsmassen auf Basis von Dicyclopentadienderivaten**

(30) Priorität: 13.08.1996 CH 1986/96
(71) Anmelder: Ciba Specialty Chemicals Holding Inc., 4057 Basel (CH)
(72) Erfinder: Beisele, Christian, 79424 Auggen (DE)

(57) **Zusammenfassung**

Eine Zusammensetzung enthaltend
(a) ein Diels-Alder-Addukt von Cyclopentadien,
(b) eine Verbindung der Formel I oder II

   (R₁R₂R₃P)ₓ L_{y}Ru²⁺Z₁⁻Z₂⁻ (I),

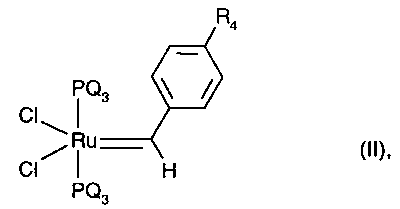

   worin R₁, R₂ und R₃ unabhängig voneinander Phenyl, Tolyl oder Cyclohexyl bedeuten, L für unsubstituiertes oder mit 1 bis 3 C₁-C₄-Alkyl substituiertes Benzol, Thiophen, Benzonitril, Acetonitril, Stickstoff (N₂), einen unsubstituierten oder teilweise oder vollständig fluorierten C₁-C₄-Alkohol, CO, H₂O oder NH₃ steht,
   Z₁⁻und Z₂⁻ unabhängig voneinander für H⁻, Cl⁻, Br⁻, BF₄⁻, PF₆⁻, SbF₆⁻, ASF₆⁻, CF₃SO₃⁻, C₆H₅-SO₃⁻, p-Toluolsulfonat (Tosylat), 3,5-Dimethylphenylsulfonat, 2,4,6-Trimethylphenylsulfonat, 4-Trifluormethylphenylsulfonat oder Cyclopentadienyl stehen,
   x eine Zahl von 1 bis 3 und y eine Zahl von 0 bis 3 darstellen, wobei gilt 2 ≤ x+y ≤ 4, Q für Phenyl, Cyclopentyl oder Cyclohexyl steht und R4 Wasserstoff, Chlor oder tert.-Butyl bedeutet, und
(c) eine Verbindung, die beim Erhitzen Wasser freisetzt,
   lässt sich zu Produkten mit hoher elektrischer Durchschlagfestigkeit und hoher Wärmeleitfähigkeit aushärten und eignet sich insbesondere als Umhüllungsmaterial für elektrische und elektronische Bauteile.

## Beschreibung

Die vorliegende Erfindung betrifft eine Zusammensetzung enthaltend ein Diels-Alder-Addukt von Cyclopentadien, einen ROMP-Katalysator und eine Verbindung, die beim Erhitzen Wasser freisetzt, ein Verfahren zur Herstellung eines Metathesepolymerisats aus dieser Zusammensetzung sowie die Verwendung dieser Zusammensetzung als Umhüllungsmaterial für elektrische oder elektronische Bauteile.

Cycloolefine, die mittels ringöffnender Metathese-Polymerisation (ROMP) polymerisiert werden können, sollten aufgrund ihrer guten mechanischen und elektrischen Eigenschaften grundsätzlich für Elektroanwendungen geeignet sein. Aufgrund des relativ niedrigen Preises bieten sich vor allem Dicyclopentadien und Norbornenderivate an. Solche Systeme werden beispielsweise in der WO 96/16100, der WO 96/20235 oder in der EP-A-348 852 beschrieben.

Diese bekannten Systeme erfüllen jedoch nicht in allen Eigenschaften die hohen Anforderungen, die bei gewissen Anwendungen, insbesondere bei der Herstellung von Umhüllungsmassen von Fly-Back-Transformatoren, Modulen und Verteiltransformatoren, gestellt werden.

Aufgabe der vorliegenden Erfindung war es, gefüllte Harzsysteme für die ringöffnende Metathese-Polymerisation bereitzustellen, die sich zu flammgehemmten Produkten mit hoher Durchschlagfestigkeit und hoher Wärmeleitfähigkeit aushärten lassen. Insbesondere sollte das gute elektrische Durchschlagsverhalten auch durch längere Einwirkung von Wärme und Feuchtigkeit (sogenannter "Pressure Cooker-Test") nicht wesentlich beeinflusst werden.

Es wurde nun gefunden, dass diese Aufgabe durch Zusatz einer Verbindung, die beim Erhitzen Wasser freisetzt, gelöst werden kann.

Gegenstand der vorliegenden Erfindung ist eine Zusammensetzung enthaltend
(a) ein Diels-Alder-Addukt von Cyclopentadien,
(b) eine Verbindung der Formel I oder II

   (R₁R₂R₃P)ₓL_{y}Ru²⁺Z₁ ⁻Z₂ ⁻ (I),

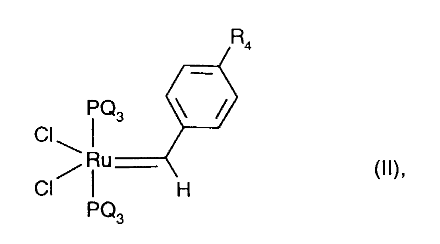

   worin R₁, R₂ und R₃ unabhängig voneinander Phenyl, Tolyl oder Cyclohexyl bedeuten, L für unsubstituiertes oder mit 1 bis 3 C₁-C₄-Alkyl substituiertes Benzol, Thiophen, Benzonitril, Acetonitril, Stickstoff (N₂), einen unsubstituierten oder teilweise oder vollständig fluorierten C₁-C₄-Alkohol, CO, H₂O oder NH₃ steht,
   Z₁ ⁻ und Z₂ ⁻ unabhängig voneinander für H⁻, Cl⁻, Br⁻, BF₄ ⁻, PF₆ ⁻, SbF₆ ⁻, ASF₆ ⁻, CF₃SO₃ ⁻, C₆H₅-SO₃ ⁻, p-Toluolsulfonat (Tosylat), 3,5-Dimethylphenylsulfonat, 2,4,6-Trimethylphenylsulfonat, 4-Trifluormethylphenylsulfonat oder Cyclopentadienyl stehen,
   x eine Zahl von 1 bis 3 und y eine Zahl von 0 bis 3 darstellen, wobei gilt 2 ≤ x+y ≤ 4, Q für Phenyl, Cyclopentyl oder Cyclohexyl steht und R₄ Wasserstoff, Chlor oder tert.-Butyl bedeutet, und
(c) eine Verbindung, die beim Erhitzen Wasser freisetzt.

Der Begriff "Verbindung, die beim Erhitzen Wasser freisetzt" bedeutet im Rahmen dieser Erfindung eine Verbindung, die mindestens bis zu einer Temperatur von 150 °C stabil ist, aber beim weiteren Erhitzen bei irgendeiner Temperatur zwischen 150 °C und 800 °C Kristallwasser oder chemisch gebundenes Wasser (Konstitutionswasser) freisetzt.

Als Komponente (a) können im Prinzip alle Verbindungen eingesetzt werden, die durch Diels-Alder-Reaktion von Cyclopentadien mit geeigneten Dienophilen erhältlich sind, hergestellt werden können.

Geeignete Diels-Alder-Addukte sind beispielsweise die folgenden Verbindungen:

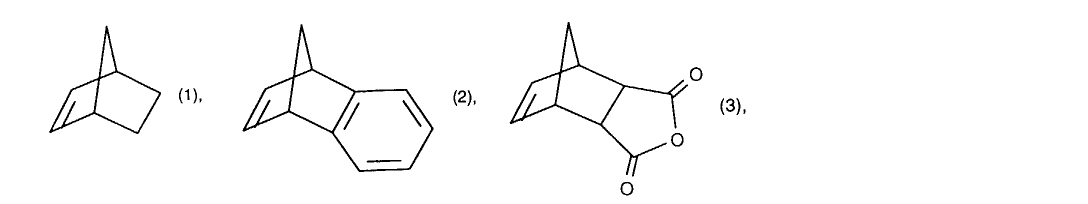

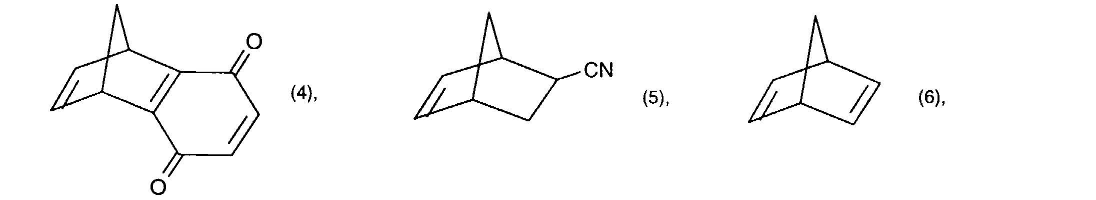

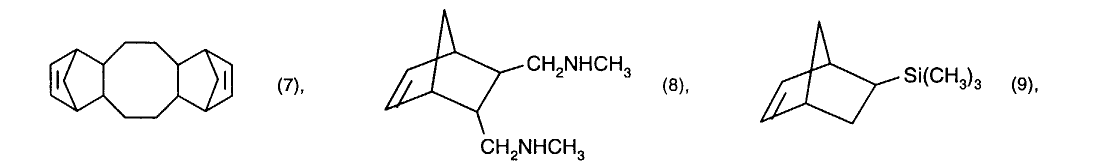

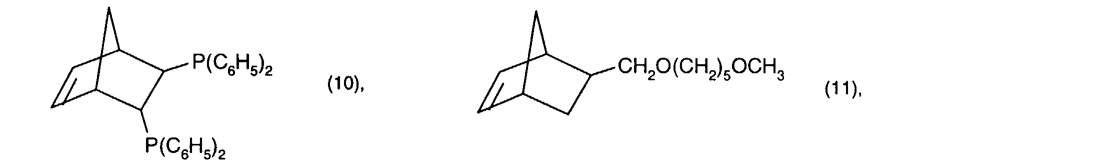

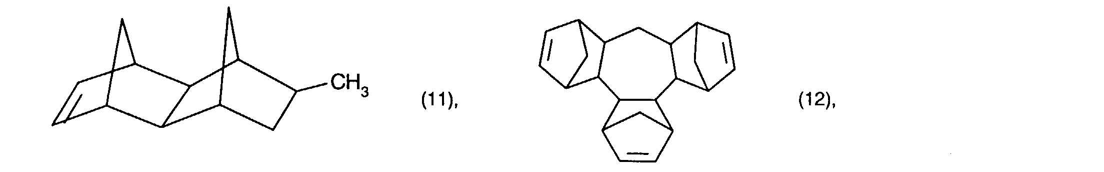

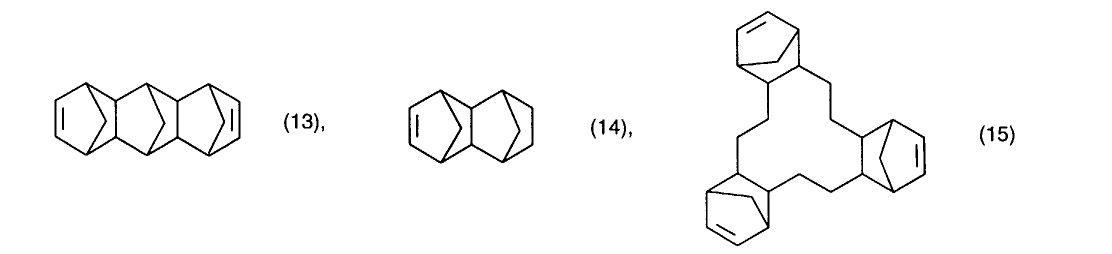

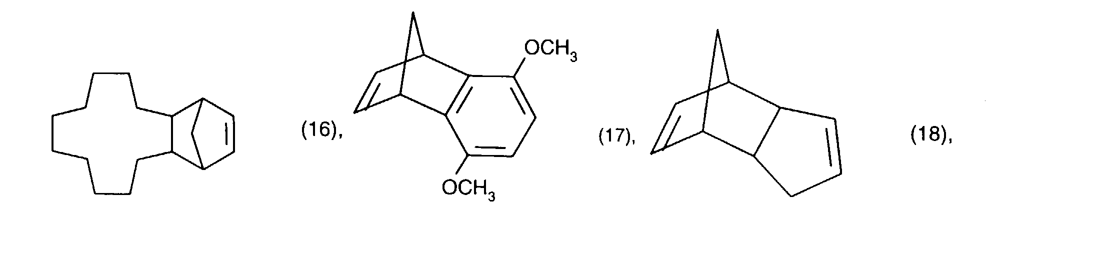

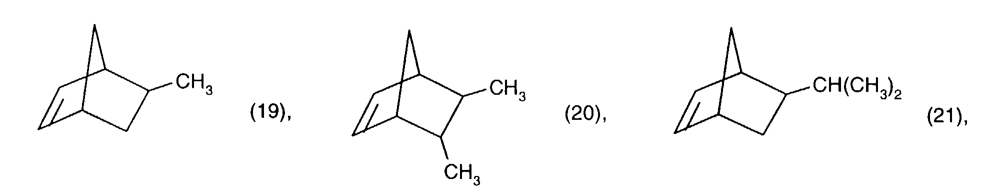

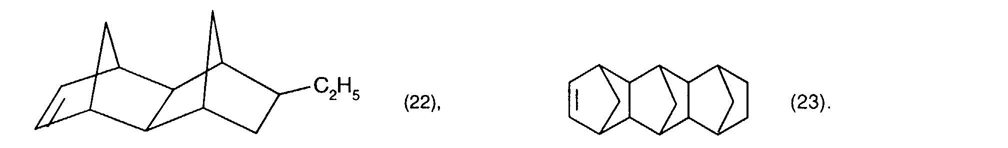

Bevorzugte Diels-Alder-Addukte sind Tetracyclododecen (14), Methyltetracyclododecen (11) und insbesondere Dicyclopentadien (18).

Die als ROMP-Katalysatoren gemäss Komponente (b) zu verwendenden Ruthenium-Verbindungen sind dem Fachmann bekannt. Die Ruthenium(+ll)-Komplexsalze der Formel I sind in der WO 96/16100 und der WO 96/20235 beschrieben; die Metall-Carben-Komplexe gemäss Formel II sind aus der WO 93/20111 bekannt.

Bevorzugte ROMP-Katalysatoren sind [(Cyclohexyl)₃P]₂RuCl₂, [(C₆H₅)₃P]₃ RuCl₂, [(C₆H₅)₃P]₃ (CO)RuH₂, [(C₆H₅)₃P]₃ RuCl(Cyclopentadienyl), [(Cyclohexyl)₃P]₂(CH₃OH)Ru(Tosylat)₂, [(o-Tolyl)₃P]₃RuCl₂, (Cyclohexyl)₃P(Cumol)RuCl₂, [(CH₃)₂CH]₃P(Cumol)RuCl₂ und insbesondere (Cyclohexyl)₃P(1-Methyl-4-1-propylbenzol)RuCl₂.

Als Komponente (c) können in den erfindungsgemässen Zusammensetzungen sowohl kristallwasserhaltige Verbindungen als auch Verbindungen, die sich beim Erhitzen unter Abspaltung von Wasser zersetzen, eingesetzt werden.

Beispiele für geeignete kristallwasserhaltige Verbindungen sind Na₂CO₃ • 10H₂O, Na₂SO₄ • 10H₂O, K₂Mg(SO₄)₂ • 6H₂O, MgCl₂ • 6H₂O, MgSO₄ • 7H₂O, CaSO₄ • 2H₂O, und CaCl₂ • 6H₂O.
Auch die diversen Natriumsilikate mit verschiedenen Kristallwassergehalten können verwendet werden. Solche Natriumsilikate können durch die Formeln Na₂SiO₃ • xH₂O oder Na₂Si₄O₉ • xH₂O charakterisiert werden.

Zu den Verbindungen, die sich beim Erhitzen unter Freisetzung von Wasser zersetzen, zählen vor allem Metallhydroxide, die bei Temperaturen zwischen 150 °C und 800 °C in die entsprechenden Metalloxide übergehen.

Beispiele für geeignete Metallhydroxide sind Mg(OH)₂, Ca(OH)₂, Sr(OH)₂, Ba(OH)₂, Zn(OH)₂, Cd(OH)₂, Hg(OH)₂, Fe(OH)₂, Fe(OH)₃, Co(OH)₂, Ni(OH)₂, Al(OH)₃, Ga(OH)₃, In(OH)₃ und Tl(OH)₃.

Auch Hydroxid-Carbonate, wie beispielsweise Mg₂(OH)₂CO₃, sind als Komponente (c) geeignet.

Vorzugsweise wird ein Hydroxid eines Metalls der II. oder III. Hauptgruppe des Periodensystems als Komponente (c) eingesetzt.

Besonders bevorzugt sind Magnesiumhydroxid und Aluminiumhydroxid.

Die in den erfindungsgemässen Zusammensetzungen zweckmässig zu verwendenden Mengen der Komponenten (a), (b) und (c) können in weiten Bereichen variieren. Die Menge der Komponente (c) beträgt zweckmässig 10-90 Gew.-%, bezogen auf die Gesamtmenge der Komponenten (a), (b) und (c).
Vorzugsweise enthält die erfindungsgemässe Zusammensetzung, bezogen auf die Gesamtmenge der Komponenten (a), (b) und (c), 9-85 Gew.-%, insbesondere 18-78 Gew.-%, der Komponente (a), 0,001-10,0 Gew.-%, insbesondere 0,01-5,0 Gew.-%, der Komponente (b) und 10-90 Gew.-%, insbesondere 20-80 Gew.-%, der Komponente (c).

Ausser der Komponente (c) können die erfindungsgemässen Zusammensetzungen weitere Füllstoffe als Komponente (d), auch in grösseren Mengen, enthalten. Diese Füllstoffe sind vorzugsweise in Mengen von 1-90 Gew.-%, besonders bevorzugt 5-60 Gew.-%, und insbesondere 10-50 Gew.-%, bezogen auf die Gesamtmenge der Komponenten (a), (b), (c) und (d), enthalten.

Geeignete Füllstoffe, die als Komponente (d) in den erfindungsgemässen Zusammensetzungen verwendet werden können, sind beispielsweise Metallpulver, Holzmehl, Glaspulver, Glaskugeln, Halbmetall- und Metalloxide, wie zum Beispiel SiO₂ (Aerosile, Quarz, Quarzmehl, Quarzgut), Korund und Titanoxid, Halbmetall- und Metallnitride, wie zum Beispiel Siliziumnitrid, Bornitrid und Aluminiumnitrid, Halbmetall- und Metallcarbide (SiC), Metallcarbonate (Dolomit, Kreide, CaCO₃), Metallsulfate (Baryt, Gips), Gesteinsmehle, natürliche oder synthetische Mineralien hauptsächlich aus der Silikatreihe, wie zum Beispiel Talkum, Glimmer, Kaolin, Wollastonit und Bentonit, oder auch Kunststoffpulver, z.B. aus Polyethylen, Polypropylen oder Polybutylenterephthalat.

Vorzugsweise wird ein Metalloxid, -carbonat, -sulfat oder -silikat oder SiO₂ als Komponente (d) verwendet.

Besonders bevorzugt als Komponente (d) ist SiO₂.

Von den verschiedenen SiO₂-Modifikationen sind Quarzmehl und Quarzgutmehl besonders bevorzugt.

Weiterhin können die härtbaren Mischungen Zähigkeitsvermittler ("Toughener") enthalten, wie zum Beispiel Core/Shell-Polymere oder die dem Fachmann als "Rubber Toughener" bekannten Elastomere oder Elastomere enthaltende Pfropfpolymere.
Geeignete Zähigkeitsvermittler sind beispielsweise in der EP-A-449 776 beschrieben.

Zur Verbesserung der elektrischen Eigenschaften (Dielektrizitätskonstante, Verlusffaktor) können den härtbaren Mischungen Silane, wie z.B. die von der Fa. Osi Specialties unter der Bezeichnung Silquest® angebotenen Verbindungen, zugesetzt werden. Geeignete Silane sind beispielsweise Octyltriethoxysilan, Methyltriethoxysilan, Vinyltriethoxysilan, Methyltrimethoxysilan, Vinyltrimethoxysilan, γ-Aminopropyltrimethoxysilan und γ-Glycidyloxypropyltrimethoxysilan.

Neben den oben erwähnten Additiven können die erfindungsgemässen Zusammensetzungen weitere übliche Zusatzstoffe enthalten, wie z.B. Antioxidantien, Lichtschutzmittel, Weichmacher, Farbstoffe, Pigmente, Thixotropiemittel, Entschäumer, Antistatika, Gleitmittel und Entformungshilfsmittel.

Weiterhin kann die erfindungsgemässe Zusammensetzung inerte Lösungsmittel enthalten. Geeignete inerte Lösungsmittel sind zum Beispiel protisch-polare und aprotische Lösungsmittel, die allein oder in Mischungen aus mindestens zwei Lösungsmitteln verwendet werden können.

Die Herstellung der erfindungsgemässen Stoffgemische kann in üblicher Weise durch Vermischen der Komponenten mit Hilfe bekannter Mischaggregate (Rührer, Kneter, Walzen, Mühlen, Trockenmischer oder Dünnschichtentgasungsmischer) erfolgen.

Die erfindungsgemässe Zusammensetzung kann direkt vor der Polymerisation hergestellt oder als vorformuliertes Gemisch verwendet werden. Das Gemisch kann vor der Polymerisation als gebrauchsfertige Formulierung längere Zeit gelagert werden, was für die grosstechnische Anwendung von Vorteil ist. Es empfiehlt sich jedoch eine Lagerung unter Lichtausschluss, wenn der Katalysator photolabile Liganden enthält.

Einen weiteren Erfindungsgegenstand bildet ein Verfahren zur Herstellung eines Metathesepolymerisats, dadurch gekennzeichnet, dass eine Zusammensetzung enthaltend die Komponenten (a) bis (c) auf eine Temperatur >40 °C erwärmt wird.

Zweckmässig wird das erfindungsgemässe Verfahren bei einer Temperatur von mindestens 60°C durchgeführt. Insbesondere wird das erfindungsgemäße Verfahren bei Temperaturen von 60 bis 300 °C, bevorzugt 60 bis 250 °C, besonders bevorzugt 60 bis 200 °C und insbesondere bevorzugt 70 bis 160 °C, durchgeführt. Nach der Polymerisation kann es vorteilhaft sein, das Gemisch bei erhöhten Temperaturen, zum Beispiel 80 bis 200 °C, nachzutempern.

Die nach dem erfindungsgemässen Verfahren hergestellten Metathesepolymerisate können ausserdem Homopolymere, Copolymere mit statistischer Verteilung der Struktureinheiten, Pfropfpolymere, Blockpolymere oder vernetzte Polymere enthalten. Die Polymere können ein mittleres Molekulargewicht von 500 bis zu 2'000'000 Dalton, vorzugsweise 1000 bis 1'000'000 Dalton (bestimmt mittels Gelpermeationschromatographie) aufweisen.

Die nach dem erfindungsgemässen Verfahren hergestellten Metathesepolymerisate zeichnen sich vor allem durch eine hohe Wärmeleitfähigkeit, hohe Zähigkeit und mechanische Festigkeit sowie durch gute elektrische Eigenschaften (hohe elektrische Durchschlagfestigkeit, insbesondere hohe elektrische Durchschlagfestigkeit nach Pressure Cooker, niedriger Verlusffaktor bzw. tanδ-Wert) aus und eignen sich besonders für Anwendungen in der Vakuum-Giesstechnologie, insbesondere als Umhüllungsmaterial für elektrische und elektronische Bauteile.
Die gehärteten Vergussmassen weisen gute mechanische und sehr gute dielektrische Eigenschaften und eine hohe Lebensdauer aus.

Gegenstand der vorliegenden Erfindung ist somit auch die Verwendung der erfindungsgemässen Zusammensetzung als Umhüllungsmaterial für elektrische oder elektronische Bauteile.

Ein weiterer Vorteil der erfindungsgemässen Zusammensetzungen resultiert aus der flammhemmenden Wirkung der als Komponente (c) zu verwendenden Substanzen, die die Verwendung von ökologisch bedenklichen halogen- oder phosphorhaltigen Flammschutzmitteln überflüssig macht. Die erfindungsgemässen Zusammensetzungen eignen sich daher besonders als Umhüllungsmasse für elektrische und elektronische Bauteile, wie zum Beispiel Transformatoren für Fernsehgeräte, Kondensatoren, Module Verteiltransformatoren usw., welche flammhemmend ausgerüstet sein müssen und keine Halogen-, Antimon- oder Phosphorverbindungen oder roten Phosphor enthalten sollten.

Die Ruthenium-Verbindungen gemäss Komponente (b) sind, im Gegensatz zu den meisten gebräuchlichen ROMP-Katalysatoren, nicht wasserempfindlich und können daher in Kombination mit wasserhaltigen Substanzen eingesetzt werden.

### Beispiele:

In den Arbeitsbeispielen werden die folgenden Abkürzungen verwendet:
- FBT:: Fly-Back-Transformator
- RT:: Raumtemperatur
- BDV:: Break Down Voltage (Durchschlagspannung)

Die BDV (Durchschlagspannung) wird in Anlehnung an IEC 243-1 gemessen, wobei jedoch nur 2 (statt 5) Prüfkörper verwendet werden und die Plattendicke 2 mm (statt 3 mm) beträgt.

### Pressure Cooker-Test:

In einem Autoklaven werden die Prüfkörper in ein Gestell eingesetzt. Anschliessend wird eine ausreichende Menge destilliertes Wasser eingefüllt, und das Gerät wird verschlossen und aufgeheizt. Durch Verwendung eines Thermometers mit Thermostat und Kontaktgeber wird die Heizleistung so geregelt, dass die Temperatur 121 °C beträgt. Der Druck wird auf ca. 2,4 bis 2,6 atm eingestellt. Die Prüfplatten werden 3 Tage im Autoklaven behandelt. Nach dem Abkühlen werden die Proben feucht gehalten und möglichst schnell der Messung (BDV) zugeführt.

### Beispiel 1:

343,9 g Dicyclopentadien, 4,4 g Vinyltrimethoxysilan (Silquest® A-171 der Firma Osi Specialties), 450 g Aluminiumhydroxid (Apyral® 4 der Firma Nabaltek) und 200 g Quarzmehl W 12 (Quarzwerke Frechen) werden bei RT in einem Mischgerät mit Ankerrührer zunächst unter Normaldruck vorgemischt und anschliessend im Vakuum (ca. 3 mbar) 20 min lang innig vermischt. Dabei entsteht eine homogene braune Masse. Anschliessend wird eine Lösung von 1,7 g (1-Methyl-4-isopropylbenzol)RuCl₂P(Cyclohexyl)₃ in 3 g Dichlormethan innerhalb von 20 min eingerührt, wobei das Lösungsmittel im Vakuum (Endwert ca. 3 mbar) entfernt wird.
Die so hergestellte erfindungsgemässe Mischung (Mischung A) wird zum Vergiessen eines Fly-Back-Transformators (Diodensplit-Fernsehtransformator) verwendet. Dazu wird der FBT in einer Vakuumvergussanlage 10 min bei RT entgast (0,5 mbar). Mischung A wird in die Vergussmaschine gefüllt und unter langsamem Rühren 10 min bei 3 mbar entgast. Anschliessend wird das Vakuum in der Giesskammer auf 10 mbar eingestellt; bei diesem Druck wird der FBT mit der Masse gefüllt. Nach erfolgtem Verguss wird in der Giesskammer wieder Normaldruck hergestellt, und der gefüllte FBT wird 1 h bei 100 °C und anschliessend 3 h bei 120 °C ausgehärtet.
Auf diese Weise wird ein Fly-Back-Transformator mit hervorragend imprägnierter Feindrahtwicklung erhalten. Das gehärtete Vergussmaterial weist die folgenden Eigenschaften auf:

| | |
|---|---|
| Glasübergangstemperatur T_{g} | 100-110°C |
| Dielektrizitätskonstante εᵣ (10 kHz bei RT) | 3,5 |
| BDV | 26 kV/mm |
| BDV nach 3 d Pressure Cooker | 23 kV/mm |
| Flammhemmung UL 94 V0 | 6 mm |
| dielektrischer Verlusffaktor tanδ (10 kHz bei RT) | 0,4 % |
| dielektrischer Verlusffaktor tanδ (10 kHz bei 120 °C) | 0,4 % |

## Patentansprüche

1. Zusammensetzung enthaltend
(a) ein Diels-Alder-Addukt von Cyclopentadien,
(b) eine Verbindung der Formel I oder II
(R₁R₂R₃P)ₓL_{y}Ru²⁺Z₁ ⁻ Z₂ ⁻ (I), 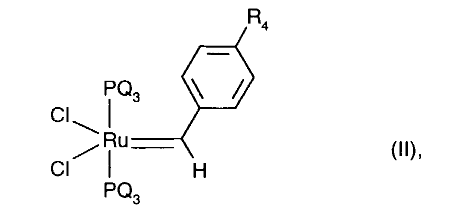
worin R₁, R₂ und R₃ unabhängig voneinander Phenyl, Tolyl oder Cyclohexyl bedeuten, L für unsubstituiertes oder mit 1 bis 3 C₁-C₄-Alkyl substituiertes Benzol, Thiophen, Benzonitril, Acetonitril, Stickstoff (N₂), einen unsubstituierten oder teilweise oder vollständig fluorierten C₁-C₄-Alkohol, CO, H₂O oder NH₃ steht,
Z₁ ⁻ und Z₂ ⁻ unabhängig voneinander für H⁻, Cl⁻, Br⁻, BF₄ ⁻, PF₆ ⁻, SbF₆ ⁻, ASF₆ ⁻, CF₃SO₃ ⁻, C₆H₅-SO₃ ⁻, P-Toluolsulfonat (Tosylat), 3,5-Dimethylphenylsulfonat, 2,4,6-Trimethylphenylsulfonat 4-Trifluormethylphenylsulfonat oder Cyclopentadienyl stehen,
x eine Zahl von 1 bis 3 und y eine Zahl von 0 bis 3 darstellen, wobei gilt 2 ≤ x+y ≤ 4,
Q für Phenyl, Cyclopentyl oder Cyclohexyl steht und R₄ Wasserstoff, Chlor oder tert.-Butyl bedeutet, und
(c) eine Verbindung, die beim Erhitzen Wasser freisetzt.

2. Zusammensetzung nach Anspruch 1, enthaltend als Komponente (a) Dicyclopentadien, Tetracyclododecen oder Methyltetracyclododecen.

3. Zusammensetzung nach Anspruch 1, enthaltend als Komponente (a) Dicyclopentadien.

4. Zusammensetzung nach Anspruch 1, enthaltend als Komponente (b) (1-Methyl-4-isopropylbenzol)RuCl₂P(Cyclohexyl)₃.

5. Zusammensetzung nach Anspruch 1, enthaltend als Komponente (c) ein Hydroxid eines Metalls der II. oder III. Hauptgruppe des Periodensystems.

6. Zusammensetzung nach Anspruch 1, enthaltend als Komponente (c) Magnesiumhydroxid oder Aluminiumhydroxid.

7. Zusammensetzung nach Anspruch 1, enthaltend 10-90 Gew.-%, bezogen auf die Gesamtmenge der Komponenten (a), (b) und (c), der Komponente (c).

8. Zusammensetzung nach Anspruch 1, enthaltend, bezogen auf die Gesamtzusammensetzung, 9-85 Gew.-% der Komponente (a), 0,001-10 Gew.-% der Komponente (b) und 10-90 Gew.-% der Komponente (c).

9. Zusammensetzung nach Anspruch 1, enthaltend, bezogen auf die Gesamtzusammensetzung, 18-78 Gew.-% der Komponente (a), 0,01-5,0 Gew.-% der Komponente (b) und 20-80 Gew.-% der Komponente (c).

10. Verfahren zur Herstellung eines Metathesepolymerisats, dadurch gekennzeichnet, dass eine Zusammensetzung nach Anspruch 1 auf eine Temperatur >40 °C erwärmt wird.

11. Verwendung der Zusammensetzung nach Anspruch 1 als Umhüllungsmaterial für elektrische oder elektronische Bauteile.
